# FASCICULE DE BREVET EUROPEEN

(11) **EP 1 118 852 B1**
(45) Date de publication et mention de la délivrance du brevet: **29.10.2003**
(21) Numéro de dépôt: 01400155.6
(22) Date de dépôt: 19.01.2001
(51) Int. Cl.: G01N 9/10, H01H 33/56, G01D 5/06

(54) **Dispositif pour contrôler la densité d'un gaz à l'intérieur d'une enceinte, et procédé de contrôle utilisant le dispositif**
Verfahren und Vorrichtung zur Überwachung der Gasdichte innerhalb eines geschlossenen Raumes
Method and device for monitoring the density of gas inside a sealed enclosure

(30) Priorité: 21.01.2000 FR 0000732
(43) Date de publication de la demande: 25.07.2001
(73) Titulaire: Alstom, 75116 Paris (FR)
(72) Inventeur: Sannino, Lucien, 34940 Juvignac (FR); Theaudiere, Bruno, 34400 Lunel (FR)
(74) Mandataire: de Lambilly Delorme, Marie Pierre

(56) Documents cités:
- EP-A- 0 077 981
- DE-A- 2 650 294
- DE-A- 19 539 551

## Description

L'invention porte en premier lieu sur un dispositif pour contrôler la densité d'un gaz diélectrique sous pression à l'intérieur d'une enceinte hermétiquement close d'un appareillage électrique, comprenant à l'intérieur de l'enceinte un boîtier ouvert dans lequel est monté un soufflet métallique étanche extensible qui est rempli d'un gaz sous pression et dont une extrémité est mobile en translation, et comprenant à l'extérieur de l'enceinte des moyens agencés pour détecter un déplacement en translation de l'extrémité mobile du soufflet sous l'effet d'une éventuelle variation de la densité du gaz diélectrique à l'intérieur de l'enceinte.
L'invention porte en second lieu sur un procédé pour réaliser le contrôle de la densité du gaz depuis l'extérieur de l'enceinte, à partir du dispositif selon l'invention.
Ce dispositif s'utilise tout particulièrement pour le contrôle de la densité d'un gaz diélectrique d'isolation, notamment du SF6 sous une pression de quelques bars, dans une enceinte métallique de blindage d'un commutateur électrique tel qu'un disjoncteur moyenne tension. Dans un tel dispositif capteur de densité, l'expansion ou la contraction du soufflet métallique est directement proportionnelle à la différence de densité entre le gaz dans le soufflet et le gaz diélectrique de l'enceinte dans lequel ce soufflet est immergé. On peut noter qu'en dehors des interventions de remplissage du gaz isolant dans l'enceinte, c'est généralement l'expansion éventuelle du soufflet qui doit être surveillée, car celle-ci est significative d'une fuite du gaz et donc d'une baisse de l'isolation électrique dans l'enceinte. Dans des constructions courantes, l'extrémité mobile du soufflet actionne des micro-contacts, lesquels produisent des signaux électriques rendant compte du déplacement du soufflet et qui sont transmis par l'intermédiaire de traversées isolantes vers l'extérieur de l'enceinte. Du fait de la diversité des pièces et de la complexité de leur montage, ces constructions sont relativement coûteuses. Dans une autre forme de réalisation, il est connu du brevet européen EP-0 077 981 un dispositif capteur de densité dans lequel un aimant permanent est fixé sur le guide support à l'intérieur de l'enceinte de façon à pouvoir se déplacer en translation le long de la paroi amagnétique de l'enceinte. Cet aimant est apte à influencer par couplage magnétique un récepteur à aiguille aimantée fixé à l'extérieur de l'enceinte. Il s'avère toutefois que ce dispositif présente certains inconvénients:
- du fait que le récepteur du couplage magnétique est fixe, l'indication de la position en translation du soufflet, et donc la mesure différentielle de la densité du gaz de l'enceinte, est fonction de l'intensité du champ magnérique captée par le récepteur. Ce système ne garantie pas une bonne précision, en particulier à mesure que la pression différentielle augmente, puisque le champ magnétique capté diminue alors rapidement. En outre, il y a un risque de démagnétisation progressive des aimants avec le temps, d'où une détérioration de la mesure.
- d'après la figure 2 de ce brevet européen, le capteur à l'intérieur d'une enceinte nécessite d'être installé dans un coin de l'enceinte où la paroi forme localement un angle droit. Or, une telle configuration de paroi ne se rencontre pas systématiquement dans toutes les enceintes d'appareillage électrique. Il peut être avantageux ou nécessaire d'installer un dispositif capteur de densité dans une zone où la paroi est complètement plane.

Un but de l'invention est de pallier les inconvéniens cités et de procurer un dispositif simple, fiable et économique pour contrôler la densité d'un gaz diélectrique à l'intérieur d'une enceinte.
A cet effet, l'invention a pour objet un dispositif pour contrôler la densité d'un gaz diélectrique sous pression à l'intérieur d'une enceinte d'appareillage électrique hermétiquement close par une paroi, comprenant à l'intérieur de l'enceinte un capteur de densité accolé à ladite paroi et qui consiste en un premier boîtier ouvert dans lequel est monté un soufflet étanche extensible dont une extrémité est mobile en translation suivant une direction longitudinale, ledit soufflet étant rempli d'un gaz sous pression et accouplé à un premier aimant permanent dont un pôle est disposé à faible distance de la paroi, un second boîtier étant disposé à l'extérieur de l'enceinte et comportant des moyens agencés pour supporter un second aimant permanent réagissant par influence magnétique à un éventuel déplacement en translation dudit premier aimant permanent suivant ladite direction longitudinale sous l'effet de l'expansion ou de la contraction dudit soufflet, afin de pouvoir relever et déterminer depuis l'extérieur de l'enceinte une variation de densité du gaz diélectrique à l'intérieur de l'enceinte, caractérisé en ce que le soufflet est accouplé au premier aimant permanent par l'intermédiaire d'un premier guide support qui est mobile en translation et qui supporte ledit premier aimant, en ce que les moyens qui supportent le second aimant permanent dans le second boîtier sont constitués d'un second guide support qui est mobile en translation suivant ladite direction longitudinale et qui est symétrique du premier guide support par rapport à ladite paroi, les premier et second aimants permanents étant agencés pour générer entre eux une force permanente d'attraction magnétique afin que tout déplacement du premier guide support soit reproduit à l'identique par le second guide support.

Avec le dispositif selon l'invention, il n'est plus nécessaire de prévoir des traversées dans l'enceinte pour transmettre des signaux électriques rendant compte du déplacement du soufflet. Par ailleurs, le dispositif peut comporter un certain nombre de paires de pièces identiques, ce qui contribue à réduire les coûts de fabrication.
Selon un mode de réalisation préféré du dispositif selon l'invention, chaque boîtier comporte une base plane pouvant être fixée à la paroi de l'enceinte, et le champ magnétique créé par un aimant permanent est dirigé perpendiculaire à ladite base. Le dispositif ainsi réalisé peut être installé sur la paroi d'une enceinte d'appareillage électrique dès lors que cette paroi présente une zone de planéité. Dans ce mode de réalisation, les deux boîtiers, les deux guides support, ainsi que les deux aimants permanents, sont préférablement de construction identique.
Selon un mode de réalisation du dispositif selon l'invention, le second boîtier comporte un index visuel le long duquel se déplace le second guide support, et/ou comporte des micro-contacts actionnés par le déplacement du second guide support.

Un exemple de réalisation du dispositif selon l'invention est décrit plus en détail ci-après et illustré par les dessins.
La figure 1 montre de façon schématique et en perspective un boîtier du dispositif capteur de densité selon l'invention.
La figure 2 est une vue schématique en projection sur un plan d'un mode préféré de réalisation du dispositif capteur de densité à double boîtier selon l'invention, où un certain nombre d'éléments sont identiques par paires.

Le dispositif capteur de densité est constitué de deux boîtiers, réalisés par exemple en matière plastique, préférablement de forme identique, et qui sont destinés à être disposés l'un à l'intérieur d'une enceinte hermétiquement close et l'autre à l'extérieur de l'enceinte, en étant superposés de façon symétrique par rapport à la paroi de l'enceinte. Cette paroi est munie de supports de fixation des deux boîtiers, qui consistent par exemple en des trous borgnes filetés dans lesquels viennent s'engager des vis de fixation. Il est entendu que l'enceinte est remplie du gaz diélectrique sous pression au moins après le montage du boîtier disposé à l'intérieur de l'enceinte.

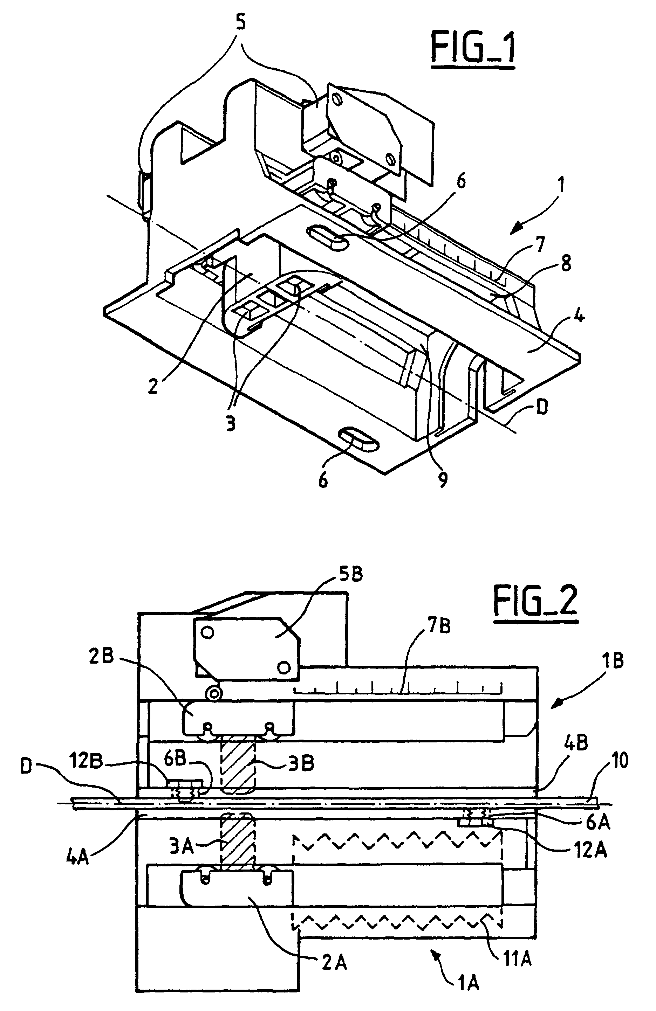

Un tel boîtier 1 est illustré sur la figure 1. Il est muni d'un guide support 2 monté mobile en translation dans le boîtier suivant une direction longitudinale D du boîtier. Un aimant permanent 3 (ou plusieurs) est fixé dans un renfoncement du guide support de telle façon à affleurer la base plane 4 du boîtier. Le capteur de densité 1 illustré sur la figure 1 est en outre muni de micro-contacts 5 qui sont actionnés par le guide support 3 quand celui-ci est déplacé en translation suivant la direction D. La figure 1 montre également les orifices 6 prévus dans la base 4 du boîtier 1 pour la fixation de celui-ci sur la paroi d'une enceinte et un index visuel 7 apposé sur le boîtier 1 le long de la course du guide support 2 qui a ici une forme en T. Les deux branches du T sont guidées dans deux lumières latérales 8 du boîtier tandis que la base du T est guidée dans une rainure 9 ouverte du côté de la base plane 4.

La figure 2 montre un premier boîtier 1A et un second boîtier 1B de forme identique, montés respectivement à l'intérieur et à l'extérieur d'une enceinte hermétiquement close. Les éléments d'un boîtier référencés sur la figure 1 portent les mêmes références sur la figure 2 à ceci près qu'ils portent également la référence A ou B suivant qu'il s'agit d'éléments du premier boîtier 1A ou du second boîtier 1B.
Le premier boîtier 1A disposé à l'intérieur de l'enceinte comprend un soufflet métallique étanche 11A qui est rempli d'un gaz sous pression et qui est immergé dans le gaz diélectrique de l'enceinte. Le soufflet 11A est monté sur le guide 2A du premier boîtier 1A de façon extensible suivant la direction D de déplacement en translation du guide 2A dans le boîtier 1A. Ainsi, une extrémité du soufflet 11A est fixée au guide 2A, et l'autre extrémité est fixée à une paroi du premier boîtier 1A.
On voit sur la figure 2 que les bases 4A et 4B respectivement des premier et second boîtiers 1A et 1B sont superposées de façon symétrique de part et d'autre de la paroi 10 de l'enceinte et que les aimants permanents 3A et 3B (de polarités opposées) fixés respectivement aux premier et second guides support 2A et 2B se font face pour réaliser un couplage magnétique. On a représenté par 12A une vis qui est engagée dans la paroi 10 à travers un orifice 6A de la base 4A et qui tient fermement le boîtier 1A contre la paroi 10 à l'intérieur de l'enceinte et par 12B une vis qui est engagée dans la paroi 10 à travers un orifice 6B de la base 4B et qui tient fermement le second boîtier 1B contre la paroi 10 à l'extérieur de l'enceinte. Dans la plupart des cas, les enceintes d'appareillages électrique ont une paroi qui présente une zone de planéité suffisante pour installer un dispositif selon l'invention avec des bases 4A et 4B planes. Toutefois, l'invention s'applique aussi à des réalisations pour l'installation sur des parois de formes particulières non planes. Par exemple, dans le cas d'une paroi légèrement cylindrique, il est possible de réaliser des bases 4A et 4B particulières pour chaque boîtier du dispositif. Dans pareil cas, les deux boîtiers peuvent toujours être fabriqués identiques, munis de guides support identiques mobiles en translation dans le sens longitudinal de la paroi de l'enceinte et sensiblement symétriques par rapport à cette paroi. Les aimants permanents 3A et 3B peuvent être fabriqués avec des longueurs différentes afin d'affleurer au plus près une surface de la paroi.
Comme visible sur la figure 2, le boîtier 1B est muni d'un index visuel 7B devant lequel se déplace le guide support 2B, et de micro-contacts 5B actionnés par le guide support 2B. Cet index visuel peut être prévu de façon systématique sous forme de moulures sur chacun des premier et second boîtiers 1A et 1B, afin de réduire le nombre de pièces différentes à fabriquer. Les fixations pour micro-contacts peuvent également être prévues en série sur chaque boîtier, qu'il soit destiné à être monté à l'intérieur ou à l'extérieur de l'enceinte. En pratique, un boîtier 1A muni de fixations pour micro-contacts 5 n'est pas muni des micro-contacts en eux mêmes, ce qui limite le coût de fabrication du dispositif capteur de densité selon l'invention.
Sous l'effet d'une expansion ou d'une contraction du soufflet mécanique 11A dans le boîtier 1A, le guide support 2A est déplacé en translation suivant la direction A. Du fait du couplage magnétique créé entre les deux guides support 2A et 2B par les aimants permanents 3A et 3B, le déplacement du guide support 2A est transféré au guide support 2B, qui est déplacé en translation dans le boîtier 1B suivant la direction D à l'identique du guide 2A.

Le procédé pour déterminer la densité du gaz diélectrique dans l'enceinte consiste en premier lieu à relever le déplacement du guide 2B par rapport à l'index visuel 7B, ou à récupérer les signaux électriques fournis par les mico-contacts 5B actionnés par le guide 2B. L'expansion ou la contraction du soufflet étant directement proportionnelle à la différence de densité entre le gaz dans le soufflet et le gaz diélectrique dans l'enceinte, la mesure du déplacement du guide 2B par rapport à au moins une position de référence préalablement étalonnée permet de déduire la valeur de la densité du gaz diélectrique.

## Revendications

1. Un dispositif pour contrôler la densité d'un gaz diélectrique sous pression à l'intérieur d'une enceinte d'appareillage électrique hermétiquement close par une paroi (10), comprenant à l'intérieur de l'enceinte un capteur de densité accolé à la paroi (10) et qui consiste en un premier boîtier (1A) ouvert dans lequel est monté un soufflet étanche (11A) extensible dont une extrémité est mobile en translation suivant une direction longitudinale (D), ledit soufflet étant rempli d'un gaz sous pression et accouplé à un premier aimant permanent (3A) dont un pôle est disposé à faible distance de la paroi (10) de l'enceinte, un second boîtier (1B) étant disposé à l'extérieur de l'enceinte et comportant des moyens agencés pour supporter un second aimant permanent (3B) et réagir par influence magnétique à un éventuel déplacement en translation dudit premier aimant permanent suivant ladite direction longitudinale sous l'effet de l'expansion ou de la contraction dudit soufflet, afin de pouvoir relever et déterminer depuis l'extérieur de l'enceinte une variation de densité du gaz diélectrique à l'intérieur de l'enceinte, **caractérisé en ce que** le soufflet (11A) est accouplé au premier aimant permanent (3A) par l'intermédiaire d'un premier guide support (2A) qui est mobile en translation et qui supporte ledit premier aimant, **en ce que** les moyens qui supportent le second aimant permanent (3B) dans le second boîtier (1B) sont constitués d'un second guide support (2B) qui est mobile en translation suivant ladite direction longitudinale (D) et qui est symétrique du premier guide support (2A) par rapport à ladite paroi (10), les premier et second aimants permanents (3A,3B) étant agencés pour générer entre eux une force permanente d'attraction magnétique afin que tout déplacement du premier guide support (2A) soit reproduit à l'identique par le second guide support (2B).

2. Le dispositif selon la revendication 1, dans lequel chaque boîtier (1A, 1B) comporte une base (4A, 4B) plane pouvant être fixée à la paroi (10) de l'enceinte, et dans lequel le champ magnétique créé par un aimant permanent (3A,3B) est dirigé perpendiculaire à ladite base.

3. Le dispositif selon la revendication 2, dans lequel les deux boîtiers (1A, 1B) incluant les deux bases (4A, 4B), les deux guides support (2A, 2B), ainsi que les deux aimants permanents (3A,3B), sont de construction identique.

4. Le dispositif selon l'une des revendications 1 à 3, dans lequel le second boîtier (1B) comporte un index visuel (7B) le long duquel se déplace le second guide support (2B).

5. Le dispositif selon l'une des revendications 1 à 4, dans lequel le second boîtier (1B) comporte des micro-contacts (5B) actionnés par le déplacement du second guide support (2B).

6. Le dispositif selon l'une des revendications 1 à 5 dans lequel le second aimant permanent (3B) est remplacé par un solénoïde alimenté en courant continu par l'intermédiaire de fils conducteurs souples.

7. Un procédé pour contrôler la densité d'un gaz diélectrique sous pression à l'intérieur d'une enceinte d'appareillage électrique, **caractérisé en ce que** le contrôle de la densité est effectué à l'aide d'un dispositif selon l'une des revendications 4 et 5, et **en ce que** la densité est déterminée en relevant le déplacement en translation du second guide support (2B) par rapport à au moins une position de référence préalablement étalonnée.

## Patentansprüche

1. Vorrichtung zur Überwachung der Dichte eines unter Druck stehenden, dielektrischen Gases innerhalb eines durch eine Wand (10) luftdicht verschlossenen Raumes eines Schaltgerätes, das innerhalb des geschlossenen Raumes einen an der Wand (10) befestigten Dichte-Sensor besitzt, und das ein erstes, offenes Gehäuse (1A) aufweist, in dem eine undurchlässige, elastische Wellrohrfeder (11A) montiert ist, wobei ein Ende dieser Wellrohrfeder in einer Längsrichtung (D) verschiebbar ist, wobei die genannte Wellrohrfeder mit einem unter Druck stehenden Gas gefüllt ist und mit einem ersten Permanentmagneten (3A) verbunden ist, wobei ein Pol dieses Permanentmagneten in geringem Abstand zu der Wand (10) des geschlossenen Raumes angeordnet ist, wobei ein zweites Gehäuse (1B) außerhalb des geschlossenen Raumes angeordnet ist und Elemente zur Aufnahme eines zweiten Permanentmagneten (3B) besitzt, der aufgrund magnetischen Einflusses auf eine eventuelle Translationsbewegung des genannten, ersten Permanentmagneten entlang der genannten Längsrichtung unter dem Einfluss der Ausdehnung oder Kontraktion der genannten Wellrohrfeder reagiert, so dass man von außerhalb des geschlossenen Raumes eine Veränderung der Dichte des dielektrischen Gases innerhalb des geschlossenen Raumes beobachten und feststellen kann, **dadurch gekennzeichnet, dass** die Wellrohrfeder (11A) mit dem ersten Permanentmagneten (3A) mittels einer ersten Aufnahmeführung (2A) verbunden ist, die verschiebbar ist, und die den ersten Magneten hält, **dadurch gekennzeichnet, dass** die Elemente, die den zweiten Permanentmagneten (3B) in dem zweiten Gehäuse (1B) halten, eine zweite, in der genannten Längsrichtung (D) verschiebbare, Aufnahmeführung (2B) besitzen, die gegenüber der genannten Wand (10) im Verhältnis zur ersten Aufnahmeführung (2A) symmetrisch angeordnet ist, wobei der erste und zweite Permanentmagnet (3A, 3B) so angeordnet sind, dass sie untereinander eine permanente, magnetische Anziehungskraft erzeugen, so dass jede Bewegung bzw. Verschiebung der ersten Aufnahmeführung (2A) von der zweiten Aufnahmeführung (2B) exakt reproduziert wird.

2. Vorrichtung nach Anspruch 1, bei der jedes Gehäuse (1A, 1B) eine ebene Basisfläche (4A, 4B) besitzt, die an der Wand (10) des geschlossenen Raumes befestigt werden kann, und bei der das durch den Permanentmagneten (3A, 3B) erzeugte Magnetfeld senkrecht zu der genannten Basisfläche verläuft.

3. Vorrichtung nach Anspruch 2, wobei die beiden Gehäuse (1A, 1B) mit den beiden Basisflächen (4A, 4B), den beiden Aufnahmeführungen (2A, 2B) sowie den beiden Permanentmagneten (3A, 3B) eine identische Konstruktion aufweisen.

4. Vorrichtung nach einem der vorhergehenden Ansprüche, wobei das zweite Gehäuse (1B) einen visuellen Index (7B) besitzt, wobei sich die zweite Aufnahmeführung (2B) entlang diesem Index verschiebt.

5. Vorrichtung nach einem der vorhergehenden Ansprüche, wobei das zweite Gehäuse (1B) Kleinkontakte besitzt, die durch die Verschiebung bzw. Bewegung der zweiten Aufnahmeführung (2B) in Gang gesetzt werden.

6. Vorrichtung nach einem der vorhergehenden Ansprüche, wobei der zweite Permanentmagnet (3B) durch eine Zylinderspule ersetzt wird, die über elastische, stromführende Leiter mit Gleichstrom versorgt wird.

7. Verfahren zur Überwachung der Dichte eines unter Druck stehenden, dielektrischen Gases innerhalb eines geschlossenen Raumes eines Schaltgerätes, **dadurch gekennzeichnet, dass** die Überwachung der Dichte mit Hilfe einer Vorrichtung nach einem der Ansprüche 4 und 5 durchgeführt wird, und dass die Dichte bestimmt wird, indem man die Translationsverschiebung der zweiten Aufnahmeführung (2B) gegenüber wenigstens einer zuvor markierten Bezugsposition aufnimmt bzw. misst.

## Claims

1. Apparatus for monitoring the density of a dielectric gas under pressure inside an enclosure of an electrical appliance, the enclosure being hermetically closed by a wall (10), the apparatus comprising, inside the enclosure, a density sensor adjacent to the wall (10), and which consists of a first open housing (1A) in which an extensible sealed bellows (11A) is mounted having one end that is movable in translation along a longitudinal direction (D), said bellows being filled with gas under pressure and coupled to a first permanent magnet (3A) having a pole that is disposed a small distance from the wall (10) of the enclosure, a second housing (1B) being disposed outside the enclosure and including means arranged to support a second permanent magnet (3B), and to respond, by magnetic influence, to possible displacement in translation of said first permanent magnet along said longitudinal direction under the effect of said bellows expanding or contracting, so as to be able to observe and determine from the outside of the enclosure any density variation in the dielectric gas inside the enclosure, the apparatus being **characterized in that** the bellows (11A) is coupled to the first permanent magnet (3A) by means of a first support guide (2A) which is movable in translation and supports said first magnet, **in that** the means which support the second permanent magnet (3B) in the second housing (1B) are constituted by a second support guide (2B) which is movable in translation along said longitudinal direction (D) and which is symmetrical to the first support guide (2A) about said wall (10), the first and second permanent magnets (3A, 3B) being arranged to generate therebetween a permanent magnetic attraction force so that any displacement of the first support guide (2A) is reproduced identically by the second support guide (2B).

2. The apparatus of claim 1, in which each housing (1A, 1B) includes a plane base (4A, 4B) that is fixable to the wall (10) of the enclosure, and in which the magnetic field created by a permanent magnet (3A, 3B) is directed perpendicularly to said base.

3. The apparatus of claim 2, in which the two housings (1A, 1B) including the two bases (4A, 4B), the two support guides (2A, 2B), and the two permanent magnets (3A, 3B) are of identical construction.

4. The apparatus of any one of claims 1 to 3, in which the second housing (18) carries a visible scale (7B) along which the second support guide (2B) moves.

5. The apparatus of any one of claims 1 to 4, in which the second housing (1B) has microswitches (5B) actuated by the displacement of the second support guide (2B).

6. The apparatus of any one of claims 1 to 5, in which the second permanent magnet (3B) is replaced by a solenoid powered with DC by means of flexible conductive wires.

7. A method of monitoring the density of a dielectric gas under pressure inside an enclosure of an electrical appliance, the method being **characterized in that** the density is monitored by means of apparatus according to claim 4 or claim 5, and **in that** the density is determined by observing the displacement in translation of the second support guide (2B) relative to at least one previously calibrated reference position.
